# EUROPÄISCHE PATENTSCHRIFT

(11) **EP 4 461 122 B1**
(45) Veröffentlichungstag und Bekanntmachung des Hinweises auf die Patenterteilung: **02.09.2026**
(21) Anmeldenummer: 24161929.5
(22) Anmeldetag: 07.03.2024
(51) Int. Cl.: A01D 45/02

(54) **VORSATZGERÄT**
ATTACHMENT DEVICE
APPAREIL ADAPTABLE

(30) Priorität: 11.05.2023 DE 102023112474
(43) Veröffentlichungstag der Anmeldung: 13.11.2024
(73) Patentinhaber: CLAAS Selbstfahrende Erntemaschinen GmbH, 33428 Harsewinkel (DE)
(72) Erfinder: Schopf, Helmut, 33129 Delbrück (DE); Schulte, Michael, 33129 Delbrück (DE); Schwaer, Christian, 48231 Warendorf (DE); Herter, Felix, 33428 Harsewinkel (DE); Schulze Zumkley, Hendrik, 33378 Rheda-Wiedenbrück (DE)
(74) Vertreter: CLAAS Gruppe

(56) Entgegenhaltungen:
- EP-A1- 1 629 707
- EP-A2- 2 687 080
- CN-A- 103 238 417
- US-A- 5 330 114
- US-A1- 2014 020 355
- US-B1- 6 272 822

## Beschreibung

Die vorliegende Erfindung betrifft ein Vorsatzgerät (wie z.B. EP 2 687 080 A2) gemäß dem Oberbegriff des Anspruches 1. Weiterhin ist eine selbstfahrende Erntemaschine mit einem Vorsatzgerät Gegenstand der vorliegenden Erfindung.

Ein Vorsatzgerät der eingangs genannten Art ist aus der DE 10 2012 106 602 A1 bekannt. Die DE 10 2012 106 602 A1 beschreibt ein Vorsatzgerät zum Ernten von stängeligem Erntegut, umfassend zumindest zwei Einzugs- und Pflückeinheiten, die jeweils mit einer Einzugseinrichtung versehen sind, welche das stängelige Erntegut in einen Pflückspalt der Einzugs- und Pflückeinheit einzieht, wobei jede Einzugs- und Pflückeinheit mit einer Häckseleinrichtung zum Zerkleinern von Stängeln des Erntegutes ausrüstbar oder nachrüstbar ist, wobei die Einzugseinrichtung und die Häckseleinrichtung jeweils ein Getriebe aufweisen, durch welche die Einzugseinrichtung und die Häckseleinrichtung unabhängig voneinander mit unterschiedlichen Drehzahlen betreibbar sind. Die Vorteile, die mit dem unabhängigen Betreiben von Einzugseinrichtung und die Häckseleinrichtung mit unterschiedlichen Drehzahlen einhergehen, erfordern die Verwendung zweier separater Getriebe. Diese weisen jeweils einen eigenen Ölhaushalt auf und sind dadurch sehr wartungsintensiv.

Ausgehend vom vorstehend genannten Stand der Technik liegt der Erfindung die Aufgabe zugrunde, ein Vorsatzgerät der eingangs genannten Art weiterzubilden, welches sich durch einen geringeren Wartungsaufwand auszeichnet.

Diese Aufgabe wird erfindungsgemäß durch ein Vorsatzgerät mit den Merkmalen des Anspruches 1 gelöst. Vorteilhafte Weiterbildungen sind Gegenstand der abhängigen Ansprüche.

Gemäß dem Anspruch 1 wird ein Vorsatzgerät zum Ernten von stängeligem Erntegut vorgeschlagen. Das Vorsatzgerät umfasst zumindest zwei Einzugs- und Pflückeinheiten, die jeweils mit einer Einzugseinrichtung versehen sind, welche das stängelige Erntegut in einen Pflückspalt der Einzugs- und Pflückeinheit einzieht, wobei jede Einzugs- und Pflückeinheit mit einer Häckseleinrichtung zum Zerkleinern von Stängeln des Erntegutes ausrüstbar oder nachrüstbar ist, wobei die Einzugseinrichtung und die Häckseleinrichtung jeweils ein Getriebe aufweisen, durch welche die Einzugseinrichtung und die Häckseleinrichtung unabhängig voneinander mit unterschiedlichen Drehzahlen betreibbar sind. Erfindungsgemäß ist vorgesehen, dass das einen Ölhaushalt aufweisende Getriebe der Einzugseinrichtung zumindest einen Anbindungsbereich zum Anschließen des Getriebes der Häckseleinrichtung umfasst, wobei der zumindest eine Anbindungsbereich des Getriebes der Einzugseinrichtung in einem angebundenen Zustand des Getriebes der Häckseleinrichtung mit zumindest einem komplementären Anbindungsbereich des Getriebes der Häckseleinrichtung zusammenwirkt, so dass sich ein gemeinsamer Ölhaushalt für beide Getriebe ausbildet.

Der Erfindung liegt die Überlegung zugrunde, bei einer Ausrüstung oder Nachrüstung mit einer Häckseleinrichtung durch das Anschließen des Getriebes der Häckseleinrichtung an das Getriebe der Einzugseinrichtung den bereits für das Betreiben des Getriebes der Einzugsvorrichtung vorhandenen Ölhaushalt auf das Getriebe der Häckseleinrichtung auszuweiten. Das Zusammenwirken der komplementär ausgeführten Anbindungsbereiche der beiden Getriebe ermöglicht eine Ausweitung des bestehenden Ölhaushaltes auf das Getriebe der Häckseleinrichtung. Das Getriebe der Häckseleinrichtung verwendet den Ölhaushalt des Getriebes der Einzugseinrichtung mit.

Bevorzugt kann das Getriebe der Häckseleinrichtung mittels zweier Anbindungsbereiche an zwei komplementären Anbindungsbereichen des Getriebes der Einzugsvorrichtung angebunden sein.

Insbesondere können die Anbindungsbereiche der Getriebe jeweils zumindest einen Durchlass für den Ölaustausch aufweisen.

Bevorzugt können die Anbindungsbereiche der von Getriebegehäusen umgebenen Getriebe durch in den Getriebegehäusen angeordnete Ölkanäle mit einem jeweiligen Ölversorgungsraum der Getriebe verbunden sein.

Gemäß einer bevorzugten Ausführung kann der zumindest eine Anbindungsbereich des Getriebes der Einzugseinrichtung durch ein Abdeckelement, welches mittels Schraubverbindung am Anbindungsbereich befestigbar ist, verschließbar sein.

Weiter bevorzugt können das Getriebegehäuse der Häckseleinrichtung und das Getriebegehäuse der Einzugseinrichtung jeweils zwei korrespondierend ausgeführte Flanschabschnitte als Anbindungsbereiche aufweisen, wobei die Flanschabschnitte des jeweiligen Getriebegehäuses unter einem Winkel von im Wesentlichen 90° zueinander versetzt angeordnet sind. Dabei kann das Getriebegehäuse der Häckseleinrichtung im Wesentlichen unterhalb des Getriebegehäuses der Einzugseinrichtung positioniert sein. Zudem ermöglicht die Ausgestaltung der Anbindungsbereiche der beiden Getriebe als Flanschabschnitte ein einfaches Abdichten des Getriebes der Einzugseinrichtung, wenn keine Häckseleinrichtung vorgesehen bzw. angebunden ist.

Dabei kann an einem Flanschabschnitt des Getriebegehäuses der Häckseleinrichtung ein den Durchlass in Umfangsrichtung begrenzender ringförmiger Stutzen über die Oberfläche des Flanschabschnitts hinausragen, welcher in den Durchlass im korrespondierenden Flanschabschnitt des Getriebegehäuses der Einzugseinrichtung im Wesentlichen formschlüssig eingreift. Dem Stutzen kommt bei der Anbindung des Getriebegehäuses der Häckseleinrichtung eine Zentrierfunktion zu, wodurch die Montage beim Ausrüsten oder einem späteren Nachrüsten der Einzugs- und Pflückeinheit vereinfacht wird.

Insbesondere kann die Einzugseinrichtung durch eine erste Antriebswelle angetrieben sein und die Häckseleinrichtung durch eine zweite Antriebswelle. Dadurch lassen sich die Einzugseinrichtung und die Häckseleinrichtung der jeweiligen Einzugs- und Pflückeinheit voneinander unabhängig mit unterschiedlichen Drehzahlen antreiben. Hierbei kann der ersten Antriebswelle ein mehrere Schaltstufen aufweisendes Getriebe vorgeschaltet sein, was das Betreiben der Einzugseinrichtung mit unterschiedlichen Drehzahlen ermöglicht. Insbesondere kann zumindest die erste Antriebswelle als durchgehende Welle, d.h. sich im Wesentlichen über die gesamte Arbeitsbreite des Vorsatzgerätes erstreckende Welle, ausgeführt sein.

Bevorzugt kann die erste Antriebswelle durch eine, insbesondere geneigt verlaufende, Zwischenwelle mit Abtrieben des Getriebes der Einzugseinrichtung verbunden sein, welche einen vertikalen Versatz zwischen der ersten Antriebswelle und den Abtrieben des Getriebes ausgleicht. Das Getriebe der Einzugseinrichtung weist je zwei Paar Abtriebe auf, von denen ein Paar dem Antrieb von Pflückwalzen und das weitere Paar dem Antrieb von Förderketten dient.

Dabei kann das Getriebegehäuse montierten der Häckseleinrichtung unterhalb der Zwischenwelle angeordnet sein. Der unterhalb der Zwischenwelle ausgebildete Raum zwischen der ersten Antriebswelle und den höherliegenden Abtrieben des Getriebes der Einzugseinrichtung lässt sich für die Anordnung des Getriebegehäuses der Häckseleinrichtung verwenden. Dabei kann das Getriebegehäuse der Häckseleinrichtung eine sich parallel zur Zwischenwelle ersteckende Anlagefläche aufweisen, welche im Wesentlichen formschlüssig an die Außenkontur des die Zwischenwelle umgebenden Gehäuseabschnitts des Getriebegehäuses der Einzugseinrichtung angepasst ist.

Des Weiteren kann ein Ölkanal im Getriebegehäuse der Häckseleinrichtung den Ölversorgungsraum in einem die erste Antriebswelle umgebenden Gehäuseabschnitt des Getriebegehäuses der Einzugseinrichtung verbinden und ein weiterer Ölkanal im Getriebegehäuse der Häckseleinrichtung den Ölversorgungsraum in einem Abtriebe des Getriebes der Einzugseinrichtung umgebenden Gehäuseabschnitt des Getriebegehäuses. Somit kann Öl vom die erste Antriebswelle umgebenden Gehäuseabschnitt zu dem die Abtriebe des Getriebes der Einzugseinrichtung umgebenden Gehäuseabschnitt gelangen, wobei zugleich das Getriebe der Häckseleinrichtung mit Öl versorgt wird.

Weiterhin kann ein Ölkanal im Getriebegehäuse der Einzugseinrichtung den Ölversorgungsraum in dem die erste Antriebswelle umgebenden Gehäuseabschnitt mit dem den Ölversorgungsraum der Abtriebe umgebenden Gehäuseabschnitt der Einzugseinrichtung verbinden. Somit kann Öl entlang der Zwischenwelle zum Ölversorgungsraum der Abtriebe der Einzugseinrichtung gelangen.

Weiterhin wird die eingangs gestellte Aufgabe durch eine selbstfahrende Erntemaschine mit einem Vorsatzgerät zum Ernten von stängeligem Erntegut gelöst, wobei das Vorsatzgerät nach einem der Ansprüche 1 bis 11 ausgeführt ist. Auf die erfindungsgemäßen Vorteile des Vorsatzgerätes darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine perspektivische Ansicht einer Einzugseinrichtung und einer Häckseleinrichtung eines Vorsatzgerätes zum Ernten von stängeligem Erntegut;
- Fig. 2: eine erste Schnittansicht der Einzugseinrichtung und der Häckseleinrichtung in Seitenansicht;
- Fig. 3: eine zweite Schnittansicht der Einzugseinrichtung und der Häckseleinrichtung in Seitenansicht;
- Fig. 4: schematisch und exemplarisch eine perspektivische Explosionsansicht der Einzugseinrichtung und der Häckseleinrichtung gemäß Fig. 1; und
- Fig. 5: schematisch und exemplarisch eine perspektivische Ansicht der Einzugseinrichtung ohne eine daran angebundene Häckseleinrichtung.

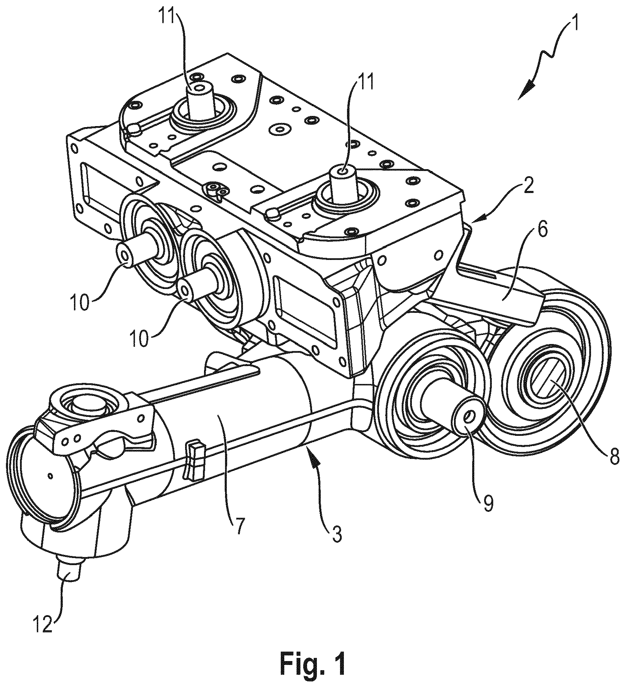

In Fig. 1 ist schematisch und exemplarisch eine perspektivische Ansicht einer Einzugsund Pflückeinheit 1 eines Vorsatzgerätes zum Ernten von stängeligem Erntegut dargestellt. Das Vorsatzgerät weist zumindest zwei Einzugs- und Pflückeinheiten 1 auf, mit denen das stängelige Erntegut, insbesondere Maispflanzen, geerntet wird.

Die Einzugs- und Pflückeinheiten 1 sind mit einer Einzugseinrichtung 2 versehen, welche das stängelige Erntegut in einen Pflückspalt der Einzugs- und Pflückeinheit 1 einzieht. Jede Einzugs- und Pflückeinheit 1 ist mit einer Häckseleinrichtung 3 zum Zerkleinern von Stängeln des Erntegutes ausrüstbar oder nachrüstbar ausgeführt.

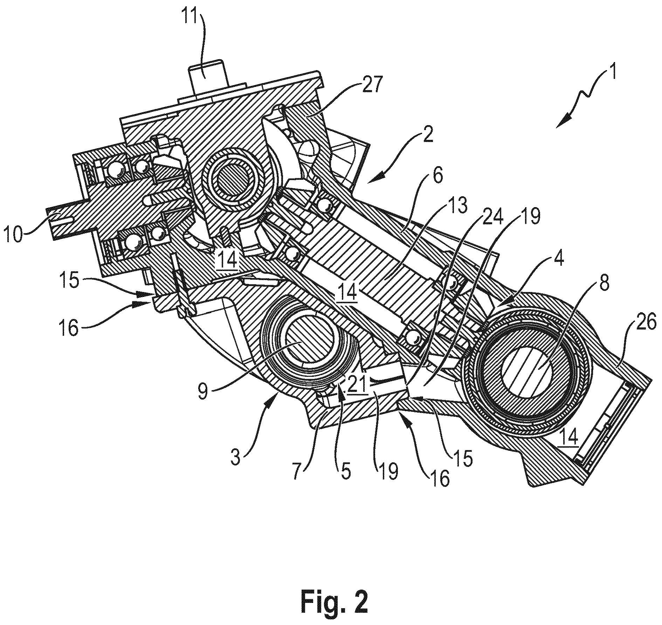

Die Einzugseinrichtung 2 weist ein Getriebe 4 und die Häckseleinrichtung 3 ein Getriebe 5 auf, durch welche die Einzugseinrichtung 2 und die Häckseleinrichtung 3 unabhängig voneinander mit unterschiedlichen Drehzahlen betreibbar sind. Das Getriebe 4 der Einzugseinrichtung 2 und das Getriebe 5 der Häckseleinrichtung 3 sind in Fig. 2 nur teilweise dargestellt. Bei einer Änderung, insbesondere Absenkung, der Antriebsdrehzahl der Einzugseinrichtung 2 lässt sich die Antriebsdrehzahl der Häckseleinrichtung 3 unabhängig hiervon aufrechterhalten, wodurch auch bei einer Absenkung der Antriebsdrehzahl der Einzugseinrichtung 2 das Häckselbild unbeeinflusst bleibt.

Das Getriebe 4 ist von einem Getriebegehäuse 6 umgeben, das Getriebe 5 von einem Getriebegehäuse 7. Das Getriebe 3 der Einzugseinrichtung 2 wird mittels einer ersten Antriebswelle 8 angetrieben. Die erste Antriebswelle 8 erstreckt sich im Wesentlichen über die Arbeitsbreite des Vorsatzgerätes. Das Getriebe 5 der Häckseleinrichtung 3 wird durch eine zweite Antriebswelle 9 angetrieben.

Das Getriebe 4 weist zwei Paar Abtriebe 10, 11 auf. Das Paar Abtriebe 10 dient dem Antrieb von - nicht dargestellten - Pflückwalzen der Einzugseinrichtung 2. Das weitere Paar Abtriebe 11 dient dem Antrieb von endlos umlaufenden Förderketten der Einzugseinrichtung 2.

Das von der zweiten Antriebswelle 9 angetriebene Getriebe 5 der Häckseleinrichtung 3 weist einen Abtrieb 12 auf, welcher dem rotierenden Antrieb eines - nicht dargestellten - Häckselmessers der Häckseleinrichtung 3 dient. Das Häckselmesser ist unterhalb der Pflückwalzen der Einzugseinrichtung 2 angeordnet.

Die Darstellung in Fig. 2 zeigt eine erste Schnittansicht der Einzugseinrichtung 2 und der Häckseleinrichtung 3 in Seitenansicht. Die erste Antriebswelle 8 ist durch eine, insbesondere geneigt verlaufende, Zwischenwelle 13 mit den Abtrieben 10, 11 des Getriebes 4 der Einzugseinrichtung 2 verbunden ist. Die Zwischenwelle 13 gleicht einen vertikalen Versatz zwischen der ersten Antriebswelle 8 und den Abtrieben 10, 11 des Getriebes 4 aus. Hierzu weist die Zwischenwelle 13 an ihren Enden jeweils ein Zahnrad auf. Das Zahnrad am der ersten Antriebswelle 8 zugewandten Ende kämmt mit einem auf der Antriebswelle 8 angeordnet Zahnrad. Das Zahnrad am den Abtrieben 10, 11 zugewandten Ende kämmt mit auf der Abtriebswelle der Abtriebe 10, 11 angeordneten Zahnrädern. Die Hohlräume innerhalb des Getriebegehäuse 6 bilden einen Ölversorgungsraum 14 des Getriebes 4 der Einzugseinrichtung 2.

Das Getriebe 4 der Einzugseinrichtung 2 weist einen Ölhaushalt auf. Das Getriebe 4 der Einzugseinrichtung 2 umfasst zumindest einen Anbindungsbereich 15 zum Anschließen des Getriebes 5 der Häckseleinrichtung 3 an das Getriebe 4 der Einzugseinrichtung 2. Hier und bevorzugt sind zwei Anbindungsbereiche 15 am Getriebe 4 vorgesehen.

Der zumindest eine Anbindungsbereich 15 des Getriebes 4 wirkt in einem angebundenen Zustand des Getriebes 5 der Häckseleinrichtung 3 mit zumindest einem komplementären Anbindungsbereich 17 des Getriebes 5 der Häckseleinrichtung 3 zusammen.

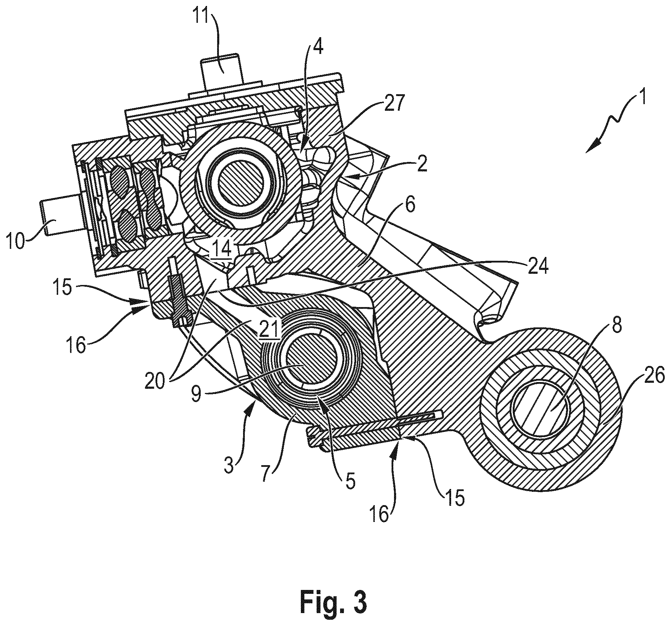

In Fig. 3 ist eine zweite Schnittansicht der Einzugseinrichtung 2 und der Häckseleinrichtung 3 in Seitenansicht dargestellt. Die Schnittebene gemäß Fig. 3 ist bezogen auf die Darstellung gemäß Fig. 2 in axialer Richtung versetzt.

Die Schnittansicht gemäß Fig. 2 zeigt einen Ölkanal 19, welcher sich vom Ölversorgungsraum 14 des Gehäuses 6 im Bereich der ersten Antriebswelle 8 bis zum Ölversorgungsraum 21 des Gehäuses 7 erstreckt. Der sich beim Anschließen der Häckseleinrichtung 3 an die Einzugseinrichtung 2 ausbildende, durchgehende Ölkanal 19 verbindet den Ölversorgungsraum 21 im Getriebegehäuse 7 der Häckseleinrichtung 3 mit dem Ölversorgungsraum 14 in einem die erste Antriebswelle 8 umgebenden Gehäuseabschnitt 26 des Getriebegehäuses 6 der Einzugseinrichtung 2. Dabei verläuft ein Teil des Ölkanals 19 innerhalb des Gehäuses 6 vom Gehäuseabschnitt 26 bis zu einem Durchlass 24. Ein weiterer Teil des Ölkanals 19 verläuft innerhalb des Gehäuses 7 von dessen Durchlass 24 bis zum Ölversorgungsraum 21.

Die Schnittansicht gemäß Fig. 3 zeigt einen weiteren Ölkanal 20, welcher sich vom Ölversorgungsraum 21 des Getriebegehäuses 7 im Bereich der zweiten Antriebswelle 9 bis zum Ölversorgungsraum 14 des Getriebegehäuses 6 erstreckt. Der weitere Ölkanal 20 verbindet den Ölversorgungsraum 21 im Getriebegehäuse 7 der Häckseleinrichtung 3 mit dem Ölversorgungsraum 14 in einem die Abtriebe 10, 11 des Getriebes 4 der Einzugseinrichtung 2 umgebenden Gehäuseabschnitt 27 des Getriebegehäuses 6. Dabei verläuft ein Teil des Ölkanals 20 innerhalb des Gehäuses 7 ausgehend vom Ölversorgungsraum 21 bis zu einem Durchlass 24. Ein weiterer Teil des Ölkanals 20 verläuft innerhalb des Gehäuses 6 von dessen Durchlass 24 bis zum Ölversorgungsraum 14 im Gehäuseabschnitt 27.

Das Zusammenwirken der Anbindungsbereiche 15 des Getriebes 4 in einem angebundenen Zustand des Getriebes 5 der Häckseleinrichtung 3 mit den komplementären Anbindungsbereichen 16 des Getriebes 5, führt dazu, dass sich ein gemeinsamer Ölhaushalt für beide Getriebe 4, 5 ausbildet. Die Ölversorgungsräume 14 und 21 sind durch die Ölkanäle 19, 20 fluidleitend miteinander verbunden. Dadurch bildet sich ein gemeinsamer Ölhaushalt der Getriebe 4, 5 von Einzugseinrichtung 2 und Häckseleinrichtung 3 aus.

Des Weiteren verbindet ein Ölkanal im Getriebegehäuse 6 der Einzugseinrichtung 2 den Ölversorgungsraum 14 in dem die erste Antriebswelle 8 umgebenden Gehäuseabschnitt 26 mit dem den Ölversorgungsraum 14 der Abtriebe 10, 11 umgebenden Gehäuseabschnitt 27 der Einzugseinrichtung 2 miteinander.

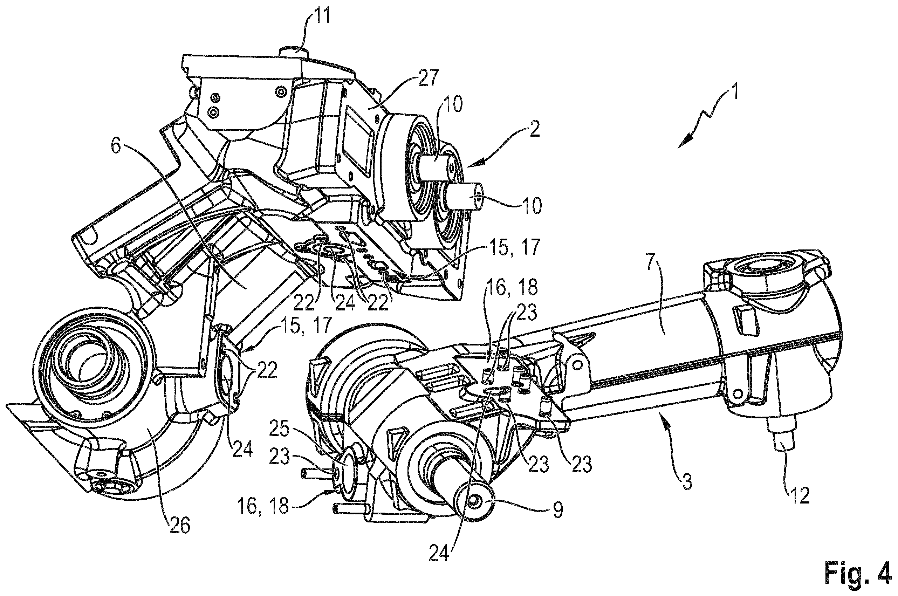

In Fig. 4 ist schematisch und exemplarisch eine perspektivische Explosionsansicht der Einzugseinrichtung 2 und der Häckseleinrichtung 3 gemäß Fig. 1 dargestellt.

Das Getriebegehäuse 6 der Einzugseinrichtung 2 und das Getriebegehäuse 7 der Häckseleinrichtung 3 weisen jeweils zwei korrespondierend ausgeführte Flanschabschnitte 17, 18 als Anbindungsbereiche 15, 16 auf, wobei die beiden Flanschabschnitte 17 bzw. 18 des jeweiligen Getriebegehäuses 6 bzw. 7 unter einem Winkel von im Wesentlichen 90° zueinander versetzt angeordnet sind.

Die beiden Flanschabschnitte 17 am Getriebegehäuse 6 sind mit Bohrungen 22 ausgeführt. Die Bohrungen 22 sind mit Innengewinden versehen. Die beiden komplementären Flanschabschnitte 18 am Getriebegehäuse 7 weisen Durchbohrungen 23 auf. Durch die Durchbohrungen 23 sind Schrauben hindurchführbar, um das Getriebegehäuse 7 am Getriebegehäuse 6 lösbar zu befestigen.

Die beiden Flanschabschnitt 17, 18 der Getriebegehäuse 6, 7 weisen jeweils einen Durchlass 24 auf. An einem Flanschabschnitt 18 des Getriebegehäuses 7 ragt ein den Durchlass 24 in Umfangsrichtung begrenzender ringförmiger Stutzen 25 über die Oberfläche des Flanschabschnitts 18 hinaus. Der Stutzen 25 greift in den Durchlass 24 im korrespondierenden Flanschabschnitt 17 am Gehäuseabschnitt 26 des Getriebegehäuses 6 im Wesentlichen formschlüssig ein. Dabei kommt dem Stutzen 25 bei der Anbindung des Getriebegehäuses 7 an dem Getriebegehäuse 6 eine Zentrierfunktion zu.

Bei der Montage werden zunächst Dichtringe an den Flanschabschnitten 17, 18 angelegt. Daraufhin wird der Stutzen 25 in den Durchlass 24 am Gehäuseabschnitt 26 des Getriebegehäuses 6 eingeführt. Anschließend wird das Getriebegehäuse 7 in Richtung des Gehäuseabschnitts 27 des Getriebegehäuses 6 nach oben verschwenkt, bis die Flanschabschnitte 17, 18 aneinander liegen, sodass die beiden Getriebegehäuse 6, 7 in den Anbindungsbereichen 15, 16 miteinander verschraubt werden können.

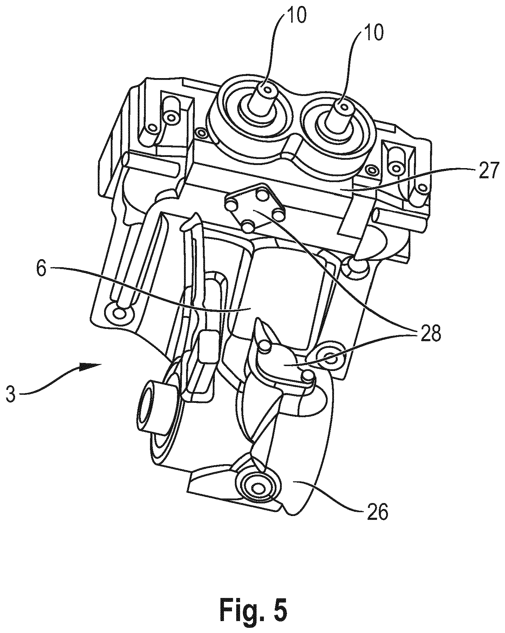

In Fig. 5 ist schematisch und exemplarisch eine perspektivische Ansicht der Einzugseinrichtung 2 ohne eine daran angebundene Häckseleinrichtung 3 dargestellt.

Die beiden Flanschabschnitte 17 des Getriebegehäuse 6 der Einzugseinrichtung 2 sind durch Getriebedeckel als Abdeckelement 28 verschlossen. Die Abdeckelemente 28 sind mit den Flanschabschnitten 17 des Getriebegehäuse 6 verschraubt.

### Bezugszeichenliste

- 1: Einzugs- und Pflückeinheit
- 2: Einzugseinrichtung
- 3: Häckseleinrichtung
- 4: Getriebe
- 5: Getriebe
- 6: Getriebegehäuse
- 7: Getriebegehäuse
- 8: Erste Antriebswelle
- 9: Zweite Antriebswelle
- 10: Abtrieb von 2
- 11: Abtrieb von 2
- 12: Abtrieb von 3
- 13: Zwischenwelle
- 14: Ölversorgungsraum
- 15: Anbindungsbereich
- 16: Anbindungsbereich
- 17: Flanschabschnitt
- 18: Flanschabschnitt
- 19: Ölkanal
- 20: Ölkanal
- 21: Ölversorgungsraum
- 22: Bohrung
- 23: Durchgangsbohrung
- 24: Durchlass
- 25: Stutzen
- 26: Gehäuseabschnitt
- 27: Gehäuseabschnitt
- 28: Getriebedeckel

## Patentansprüche

1. Vorsatzgerät zum Ernten von stängeligem Erntegut, umfassend zumindest zwei Einzugs- und Pflückeinheiten (1), die jeweils mit einer Einzugseinrichtung (2) versehen sind, welche das stängelige Erntegut in einen Pflückspalt der Einzugs- und Pflückeinheit (1) einzieht, wobei jede Einzugs- und Pflückeinheit (1) mit einer Häckseleinrichtung (3) zum Zerkleinern von Stängeln des Erntegutes ausrüstbar oder nachrüstbar ist, wobei die Einzugseinrichtung (2) und die Häckseleinrichtung (3) jeweils ein Getriebe (4, 5) aufweisen, durch welche die Einzugseinrichtung (2) und die Häckseleinrichtung (3) unabhängig voneinander mit unterschiedlichen Drehzahlen betreibbar sind, **dadurch gekennzeichnet, dass** das einen Ölhaushalt aufweisende Getriebe (4) der Einzugseinrichtung (2) zumindest einen Anbindungsbereich (15) zum Anschließen des Getriebes (5) der Häckseleinrichtung (3) umfasst, wobei der zumindest eine Anbindungsbereich (15) des Getriebes (4) der Einzugseinrichtung (2) in einem angebundenen Zustand des Getriebes (5) der Häckseleinrichtung (3) mit zumindest einem komplementären Anbindungsbereich (16) des Getriebes (5) der Häckseleinrichtung (2) zusammenwirkt, so dass sich ein gemeinsamer Ölhaushalt für beide Getriebe (4, 5) ausbildet.

2. Vorsatzgerät nach Anspruch 1, **dadurch gekennzeichnet, dass** die Anbindungsbereiche (15, 17) der Getriebe (4, 5) jeweils zumindest einen Durchlass (24) für den Ölaustausch aufweisen.

3. Vorsatzgerät nach Anspruch 1 oder 2, **dadurch gekennzeichnet, dass** die Anbindungsbereiche (15, 17) der von Getriebegehäusen (6, 7) umgebenen Getriebe (4, 5) durch in den Getriebegehäusen (6, 7) angeordnete Ölkanäle (19, 20) mit einem jeweiligen Ölversorgungsraum (14, 21) der Getriebe (4, 5) verbunden sind.

4. Vorsatzgerät nach einem der Ansprüche 1 bis 3, **dadurch gekennzeichnet, dass** der zumindest eine Anbindungsbereich (15) des Getriebes (4) der Einzugseinrichtung (2) durch ein Abdeckelement (28), welches mittels Schraubverbindung am Anbindungsbereich (15) befestigbar ist, verschließbar ist.

5. Vorsatzgerät nach Anspruch 3 oder 4, **dadurch gekennzeichnet, dass** das Getriebegehäuse (7) der Häckseleinrichtung (3) und das Getriebegehäuse (6) der Einzugseinrichtung (2) jeweils zwei korrespondierend ausgeführte Flanschabschnitte (17, 18) als Anbindungsbereiche (15, 16) aufweisen, wobei die Flanschabschnitte (17, 18) des jeweiligen Getriebegehäuses (6, 7) unter einem Winkel von im Wesentlichen 90° zueinander versetzt angeordnet sind.

6. Vorsatzgerät nach Anspruch 5, **dadurch gekennzeichnet, dass** an einem Flanschabschnitt (18) des Getriebegehäuses (7) der Häckseleinrichtung (3) ein den Durchlass (24) in Umfangsrichtung begrenzender ringförmiger Stutzen (25) über die Oberfläche des Flanschabschnitts (18) hinausragt, welcher in den Durchlass (24) im korrespondierenden Flanschabschnitt (17) des Getriebegehäuses (6) der Einzugseinrichtung (2) im Wesentlichen formschlüssig eingreift.

7. Vorsatzgerät nach einem der vorangehenden Ansprüche, **dadurch gekennzeichnet, dass** die Einzugseinrichtung (2) durch eine erste Antriebswelle (8) angetrieben ist und die Häckseleinrichtung (3) durch eine zweite Antriebswelle (9).

8. Vorsatzgerät nach Anspruch 7, **dadurch gekennzeichnet, dass** die erste Antriebswelle (8) durch eine, insbesondere geneigt verlaufende, Zwischenwelle (13) mit Abtrieben (10 ,11) des Getriebes (4) der Einzugseinrichtung (2) verbunden ist, welche einen vertikalen Versatz zwischen der ersten Antriebswelle (8) und den Abtrieben (10, 11) des Getriebes (4) ausgleicht.

9. Vorsatzgerät nach Anspruch 8, **dadurch gekennzeichnet, dass** das Getriebegehäuse (7) der montierten Häckseleinrichtung (3) unterhalb der Zwischenwelle (13) angeordnet ist.

10. Vorsatzgerät nach Anspruch 8 oder 9, **dadurch gekennzeichnet, dass** ein Ölkanal (19) im Getriebegehäuse (7) der Häckseleinrichtung (3) den Ölversorgungsraum (14) in einem die erste Antriebswelle (8) umgebenden Gehäuseabschnitt (26) des Getriebegehäuses (6) der Einzugseinrichtung (2) mit dem Ölversorgungsraum (21) der Häckseleinrichtung (3) verbindet und ein weiterer Ölkanal (20) im Getriebegehäuse (7) den Ölversorgungsraum (21) der Häckseleinrichtung (3) mit dem Ölversorgungsraum (14) in einem die Abtriebe (10, 11) des Getriebes der Einzugseinrichtung (2) umgebenden Gehäuseabschnitt (27) des Getriebegehäuses (6).

11. Vorsatzgerät nach Anspruch 10, **dadurch gekennzeichnet, dass** ein Ölkanal im Getriebegehäuse (6) der Einzugseinrichtung (2) den Ölversorgungsraum (14) in dem die erste Antriebswelle (8) umgebenden Gehäuseabschnitt (26) mit dem den Ölversorgungsraum (14) der Abtriebe (10, 11) umgebenden Gehäuseabschnitt (27) der Einzugseinrichtung (2) verbindet.

12. Selbstfahrende Erntemaschine mit einem Vorsatzgerät zum Ernten von stängeligem Erntegut, **dadurch gekennzeichnet, dass** das Vorsatzgerät nach einem der Ansprüche 1 bis 11 ausgeführt ist.

## Claims

1. Attachment for harvesting stalk-like crops, comprising at least two intake and picking units (1), which are each provided with an intake device (2) which draws the stalk-like crop into a picking gap in the intake and picking unit (1), wherein each intake and picking unit (1) can be equipped or retrofitted with a chopping device (3) for comminuting stalks of the crop, wherein the intake device (2) and the chopping device (3) each have a gearbox (4, 5) by which the intake device (2) and the chopping device (3) are operable independently of each other at different rotational speeds, **characterized in that** the gearbox (4), which has an oil system, of the intake device (2) comprises at least one connection region (15) for connecting the gearbox (5) of the chopping device (3), wherein, in a connected state of the gearbox (5) of the chopping device (3), the at least one connection region (15) of the gearbox (4) of the intake device (2) interacts with at least one complementary connection region (16) of the gearbox (5) of the chopping device (2), thus forming a common oil system for both gearboxes (4, 5).

2. Attachment according to Claim 1, **characterized in that** the connection regions (15, 17) of the gearboxes (4, 5) each have at least one passage (24) for the exchange of oil.

3. Attachment according to Claim 1 or 2, **characterized in that** the connection regions (15, 17) of the gearboxes (4, 5) surrounded by gearbox housings (6, 7) are connected by oil ducts (19, 20) arranged in the gearbox housings (6, 7) to a respective oil supply chamber (14, 21) of the gearboxes (4, 5).

4. Attachment according to any one of Claims 1 to 3, **characterized in that** the at least one connection region (15) of the gearbox (4) of the intake device (2) is closeable by a cover element (28), which is fastenable to the connection region (15) by means of a screw connection.

5. Attachment according to Claim 3 or 4, **characterized in that** the gearbox housing (7) of the chopping device (3) and the gearbox housing (6) of the intake device (2) each have two correspondingly designed flange portions (17, 18) as connection regions (15, 16), the flange portions (17, 18) of the respective gearbox housing (6, 7) being offset from each other at an angle of essentially 90°.

6. Attachment according to Claim 5, **characterized in that**, on a flange portion (18) of the gearbox housing (7) of the chopping device (3), an annular connecting stub (25) delimiting the passage (24) in the circumferential direction projects beyond the surface of the flange portion (18) and engages in a substantially form-fitting manner in the passage (24) in the corresponding flange portion (17) of the gearbox housing (6) of the intake device (2).

7. Attachment according to any one of the preceding claims, **characterized in that** the intake device (2) is driven by a first drive shaft (8) and the chopping device (3) by a second drive shaft (9).

8. Attachment according to Claim 7, **characterized in that** the first drive shaft (8) is connected to output drives (10, 11) of the gearbox (4) of the intake device (2) by an, in particular inclined, intermediate shaft (13) which compensates for a vertical offset between the first drive shaft (8) and the output drives (10, 11) of the gearbox (4).

9. Attachment according to Claim 8, **characterized in that** the gearbox housing (7) of the mounted chopping device (3) is arranged below the intermediate shaft (13).

10. Attachment according to Claim 8 or 9, **characterized in that** an oil duct (19) in the gearbox housing (7) of the chopping device (3) connects the oil supply chamber (14) in a housing portion (26) of the gearbox housing (6) of the intake device (2), which housing portion surrounds the first drive shaft (8), to the oil supply chamber (21) of the chopping device (3), and a further oil duct (20) in the gearbox housing (7) connects the oil supply chamber (21) of the chopping device (3) to the oil supply chamber (14) in a housing portion (27) of the gearbox (6), which housing portion surrounds the output drives (10, 11) of the gearbox of the intake device (2).

11. Attachment according to Claim 10, **characterized in that** an oil duct in the gearbox housing (6) of the intake device (2) connects the oil supply chamber (14) in the housing portion (26) surrounding the first drive shaft (8) to the housing portion (27) of the intake device (2), which housing portion surrounds the oil supply chamber (14) of the output drives (10, 11).

12. Self-propelled harvester with an attachment for harvesting stalk-like crops, **characterized in that** the attachment is designed according to any one of Claims 1 to 11.

## Revendications

1. Dispositif rapporté pour la récolte de produit de récolte à tiges, comprenant au moins deux unités d'alimentation et de cueillette (1), qui sont chacune pourvues d'un appareil d'alimentation (2), lequel entraîne le produit de récolte à tiges dans une fente de cueillette de l'unité d'alimentation et de cueillette (1), chaque unité d'alimentation et de cueillette (1) pouvant être équipée ou rééquipée d'un appareil de hachage (3) destiné à broyer des tiges du produit de récolte, l'appareil d'alimentation (2) et l'appareil de hachage (3) comprenant chacun une transmission (4, 5), par lesquelles l'appareil d'alimentation (2) et l'appareil de hachage (3) peuvent être entraînés indépendamment l'un de l'autre à des vitesses de rotation différentes, **caractérisé en ce que** la transmission (4), présentant un circuit d'huile, de l'appareil d'alimentation (2) comprend au moins une zone de rattachement (15) destinée au raccordement de la transmission (5) de l'appareil de hachage (3), l'au moins une zone de rattachement (15) de la transmission (4) de l'appareil d'alimentation (2) coopérant, dans un état rattaché de la transmission (5) de l'appareil de hachage (3), avec au moins une zone de rattachement complémentaire (16) de la transmission (5) de l'appareil de hachage (2), de sorte qu'un circuit d'huile commun est formé pour les deux transmissions (4, 5).

2. Dispositif rapporté selon la revendication 1, **caractérisé en ce que** les zones de rattachement (15, 17) des transmissions (4, 5) présentent chacune au moins un passage (24) destiné à l'échange d'huile.

3. Dispositif rapporté selon la revendication 1 ou 2, **caractérisé en ce que** les zones de rattachement (15, 17) des transmissions (4, 5), entourées par des boîtiers de transmission (6, 7), sont reliées à un espace d'alimentation en huile (14, 21) respectif des transmissions (4, 5) par des canaux d'huile (19, 20) disposés dans les boîtiers de transmission (6, 7).

4. Dispositif rapporté selon l'une des revendications 1 à 3, **caractérisé en ce que** l'au moins une zone de rattachement (15) de la transmission (4) de l'appareil d'alimentation (2) peut être fermée par un élément de recouvrement (28), qui peut être fixé sur la zone de rattachement (15) au moyen d'une liaison vissée.

5. Dispositif rapporté selon la revendication 3 ou 4, **caractérisé en ce que** le boîtier de transmission (7) de l'appareil de hachage (3) et le boîtier de transmission (6) de l'appareil d'alimentation (2) présentent chacun deux sections de bride (17, 18), réalisées de manière correspondante, en tant que zones de rattachement (15, 16), les sections de bride (17, 18) du boîtier de transmission (6, 7) respectif étant disposées avec un décalage l'une par rapport à l'autre selon un angle d'essentiellement 90°.

6. Dispositif rapporté selon la revendication 5, **caractérisé en ce que**, sur une section de bride (18) du boîtier de transmission (7) de l'appareil de hachage (3), un embout annulaire (25), qui délimite le passage (24) dans la direction circonférentielle, fait saillie au-delà de la surface de la section de bride (18), lequel s'engage de manière essentiellement complémentaire de forme dans le passage (24) de la section de bride correspondante (17) du boîtier de transmission (6) de l'appareil d'alimentation (2).

7. Dispositif rapporté selon l'une des revendications précédentes, **caractérisé en ce que** l'appareil d'alimentation (2) est entraîné par un premier arbre d'entraînement (8) et l'appareil de hachage (3) par un deuxième arbre d'entraînement (9).

8. Dispositif rapporté selon la revendication 7, **caractérisé en ce que** le premier arbre d'entraînement (8) est relié, par un arbre intermédiaire (13), notamment incliné, à des sorties (10, 11) de la transmission (4) de l'appareil d'alimentation (2), lequel compense un décalage vertical entre le premier arbre d'entraînement (8) et les sorties (10, 11) de la transmission (4).

9. Dispositif rapporté selon la revendication 8, **caractérisé en ce que** le boîtier de transmission (7) de l'appareil de hachage (3) monté est disposé en dessous de l'arbre intermédiaire (13).

10. Dispositif rapporté selon la revendication 8 ou 9, **caractérisé en ce qu'**un canal d'huile (19), situé dans le boîtier de transmission (7) de l'appareil de hachage (3), relie l'espace d'alimentation en huile (14), situé dans une section de boîtier (26) du boîtier de transmission (6) de l'appareil d'alimentation (2) entourant le premier arbre d'entraînement (8), à l'espace d'alimentation en huile (21) de l'appareil de hachage (3), et **en ce qu'**un autre canal d'huile (20), situé dans le boîtier de transmission (7), relie l'espace d'alimentation en huile (21) de l'appareil de hachage (3) à l'espace d'alimentation en huile (14), situé dans une section de boîtier (27) du boîtier de transmission (6) entourant les sorties (10, 11) de la transmission de l'appareil d'alimentation (2).

11. Dispositif rapporté selon la revendication 10, **caractérisé en ce qu'**un canal d'huile, situé dans le boîtier de transmission (6) de l'appareil d'alimentation (2), relie l'espace d'alimentation en huile (14), situé dans la section de boîtier (26) entourant le premier arbre d'entraînement (8), à la section de boîtier (27) de l'appareil d'alimentation (2) entourant l'espace d'alimentation en huile (14) des sorties (10, 11).

12. Machine de récolte automotrice comprenant un dispositif rapporté pour la récolte de produit de récolte à tiges, **caractérisée en ce que** le dispositif rapporté est réalisé selon l'une des revendications 1 à 11.
